# EUROPEAN PATENT APPLICATION

(11) **EP 4 275 817 A1**
(43) Date of publication of application: **15.11.2023**
(21) Application number: 23171033.6
(22) Date of filing: 02.05.2023
(51) Int. Cl.: B22F 12/50, B23K 9/04, B33Y 10/00, B33Y 30/00, B33Y 40/10, B29C 64/118, B29C 64/209, B22F 12/58, B22F 12/53

(54) **APPARATUS AND PROCESS FOR CREATION OF DENSELY PACKED PRECISION ALIGNED LAYER WOUND ELECTROMAGNETIC COILS FOR ELECTRIC MOTORS, VOICE COILS, AND GALVANOMETERS**

(30) Priority: 10.05.2022 US 202263340164 P
(71) Applicant: Thorlabs Measurement Systems, Inc., Blairstown, New Jersey 07825 (US)
(72) Inventor: Brooker, Jeffrey, 07825 Blairstown, New Jersey (US); Patton, Shane, 07825 Blairstown, New Jersey (US); Backus, Sterling, 07825 Blairstown, New Jersey (US); Candiloro, Carl Brian, 07825 Blairstown, New Jersey (US)
(74) Representative: Grättinger Möhring von Poschinger Patentanwälte Partnerschaft mbB

(57) **Abstract**

An apparatus for creating an electromagnetic coil, including: a platform for building the coil; a dispenser to dispense a wire via a nozzle; a wire feeder to feed the wire through the dispenser; a coating applicator to apply a bondable overcoat to the wire, such that when a section of the wire is laid adjacent to another section of the wire, the bondable overcoats of the respective sections bond to each other; one or more actuators to provide at least three degrees of freedom to the dispenser and/or the platform; and a processor to control the one or more actuators to move the dispenser and/or platform such that the wire is dispensed at a specified location relative to the platform; wherein the processor controls the one or more actuators based on a program stored in a memory, the program including instructions for laying the wire according to a predetermined pattern.

## Description

### CROSS REFERENCE TO RELATED APPLICATIONS

This application claims the benefit of U.S. Provisional Patent Application No. 63/340,164 filed on May 10, 2022. The disclosure and entire teachings of U.S. Provisional Patent Application 63/340,164 are hereby incorporated by reference.

### FIELD OF THE INVENTION

The invention generally relates to manufacturing of electromagnetic coils. More particularly, the invention relates to an apparatus and process for creation of densely packed precision aligned layer wound electromagnetic coils for electric motors, voice coils, and galvanometers, etc.

### BACKGROUND

The packing density in a small coil determines the efficiency of the coil and therefore is important to the overall performance of the device. The concept of layer winding to create high packing density coils is well established and easily achieved with CNC coil winding machines. The current method of creating a layer wound coil involves the use of a CNC coil winder on a mandrel. However, a significant limitation of these machines is that the coil geometry must be substantially planar. This process does not allow the creation of complex 3D geometries and precise packing of the wire. Furthermore, winding and then reshaping these coils poses significant risk to creation of electrical or mechanical failures to the conductors when attempting to generate more complex geometries. Another problem with the current method of heating the wire after the winding is that it does not always result in the perfect translation of the shape to the final product.

Therefore, there is long felt need for an apparatus and process for creation of densely packed precision aligned layer wound electromagnetic coils to overcome the problems that plague the existing systems and processes discussed above.

### SUMMARY

An embodiment of the present disclosure proposes to manufacture a densely packed precision aligned layer wound electromagnetic coil by precise positioning of the wire in specific positions and adhering the wire to an adjacent wire as the wire is being placed, which ensures that the position does not move when the coil is transferred into its final housing.

An embodiment of the present disclosure proposes to lay down wire on a build platform in a similar fashion to how the plastic filament is used by a 3D printer to create a 3D model. A dispenser having multiple degrees of freedom relative to the platform is used to lay a copper wire or other conducting materials onto the platform, while the dispenser and platform moves relatively to each other. Typical 3D printers and CNC machines support translation in 3 axes (e.g., x-, y- and z-axes). An embodiment of the present disclosure provides 4- or 5-axis control to allow for more flexibility in laying the wire in different geometrical settings. This method would allow for the creation of complex coil designs and also allow for the coil to be easily removed from the device and inserted into the final housing.

One example application of an embodiment would be the creation of a precision high performance motor design, especially if the motor design is very small or intricate. Other applications include the manufacturing of galvanometers, hearing aids, voice coils, solenoids, etc.

One embodiment of the present disclosure provides an apparatus for creating an electromagnetic coil, including: a platform for building the coil; a dispenser configured to dispense a wire via the nozzle; a wire feeder configured to feed the wire through the dispenser; a coating applicator configured to apply a bondable overcoat to the wire, such that when a section of the wire is laid adjacent to another section of the wire, the bondable overcoats of the respective sections bond to each other; one or more actuators configured to provide at least three degrees of freedom to the dispenser and/or the platform; and a processor configured to control the one or more actuators to move the dispenser and/or platform such that the wire is dispensed at a specified location relative to the platform; wherein the processor controls the one or more actuators based on a program stored in a memory, the program including instructions for laying the wire according to a predetermined pattern.

One embodiment of the present disclosure provides a method of creating an electromagnetic coil, including: providing a platform for building the coil; dispensing a wire via a nozzle of a dispenser; feeding, by a feeder, the wire through the dispenser; applying, by a coating applicator, a bondable overcoat to the wire, such that when a section of the wire is laid adjacent to another section of the wire, the bondable overcoats of the respective sections bond to each other; providing, by one or more actuators, at least three degrees of freedom to the dispenser and/or the platform; and controlling, by a processor, the one or more actuators to move the dispenser and/or the platform such that the wire is dispensed at a specified location relative to the platform; wherein the controlling of the one or more actuators is based on a program stored in a memory, the program including instructions for laying the wire according to a predetermined pattern.

### BRIEF DESCRIPTION OF THE DRAWINGS

FIG. 1 shows an apparatus for creation of electromagnetic coils according to an embodiment.
FIG. 2A - 2C show different stress levels on the wire for different dispenser/platform orientations.
FIG. 3A shows a wire with a curable epoxy coating according to an embodiment.
FIG. 3B shows a wire with an insulation layer and a bondable overcoat according to an embodiment.
FIG. 4A shows a cross sectional view of a coating applicator that applies a coating material to a wire according to an embodiment.
FIG. 4B shows a cross sectional view of a coating applicator that applies a coating material to a wire according to an embodiment.
FIG. 4C shows an integrated dispenser that applies a coating material to a wire and dispenses the coated wire according to an embodiment.
FIG. 5 shows a wire being wound onto a mandrel according to an embodiment.

### DETAILED DESCRIPTION OF THE PREFERRED EMBODIMENTS

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the exemplified embodiments. Accordingly, the invention expressly should not be limited to such exemplary embodiments illustrating some possible non-limiting combination of features that may exist alone or in other combinations of features; the scope of the invention being defined by the claims appended hereto.

This disclosure describes the best mode or modes of practicing the invention as presently contemplated. This description is not intended to be understood in a limiting sense, but provides an example of the invention presented solely for illustrative purposes by reference to the accompanying drawings to advise one of ordinary skill in the art of the advantages and construction of the invention. In the various views of the drawings, like reference characters designate like or similar parts.

The disclosure disclosed herein is a method and device that will allow the creation of a "perfect" coil for electromagnetic actuators. The device will modify an existing fused deposition modeling (FDM) device, e.g., 3D filament printer. The plastic filament will be replaced with copper wire, or other conducting wires, that is coated to provide adhesion and electrical insulation. As the device lays down the copper wire, the dispenser of the device will heat the wire so that sections of the wire in the same layer and/or successive layers are bonded to each other as the head or the platform moves under the device. A forth and or fifth axis will be added to the machine so that complex geometries can be created. Furthermore, multiple "print" heads (dispensers) can be interspersed with each other so that complex coils that have multiple windings co-mingled can be created.

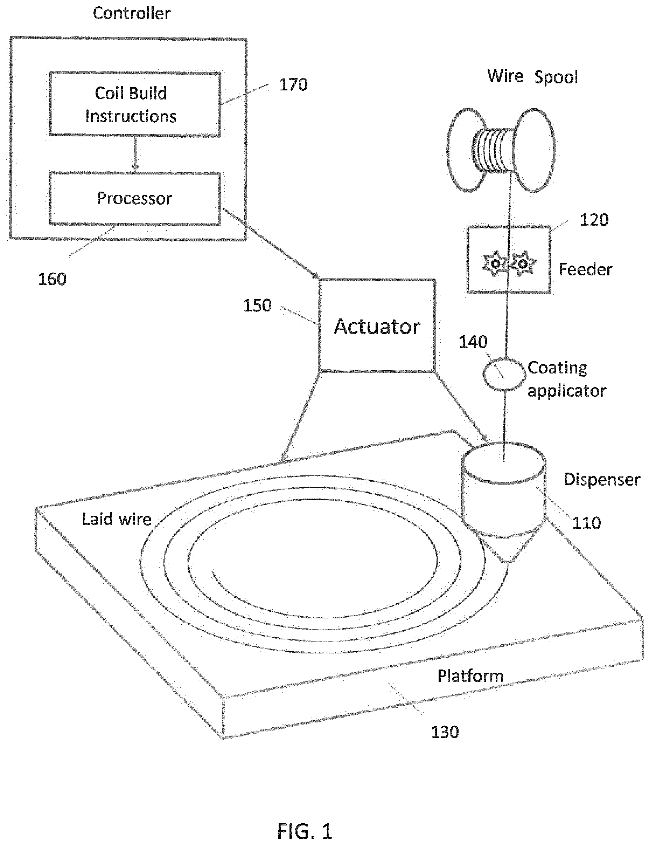

FIG. 1 shows an apparatus for creating an electromagnetic coil according to an embodiment. As shown, a dispenser 110 receives a wire from a source, e.g., a spool of wire fed by a feeder 120 and deposits the wire onto a platform 130 according to a determined pattern. A coating applicator 140 applies a bondable overcoat to the wire so that when a section of the wire is laid adjacent to another section of the wire, the bondable overcoats of the respective sections bond to each other. The bondable overcoat can also provide adhesion of the initial layer to the platform. The relative motion between the dispenser and the platform is provided by one or more actuators 150. The one or more actuators provide multiple degrees of freedom at least in the x-, y- and z-directions in one embodiment, and may further provide 4 or 5 axes of motion in another embodiments. The relative motion between the dispenser and platform may be achieved by moving the dispenser alone, moving the platform alone, or in combinations of moving both the dispenser and the platform. Depicted in FIG. 1 is a controller that controls the one or more actuators. The controller includes a processor 160 and memory 170. Stored in the memory is a program encoded with instructions (e.g., G-code if the controller is implemented with CNC) for laying the wire according to a 3D model of the coil design. The process of laying the wire is similar to the FDM process used by many 3D printers. The processor 160 executes the program and provides instructions to the one or more actuators to move the nozzle of the dispenser to specified locations relative to the platform so that the wire is deposited onto the platform according to the program instructions. The processor may also control the wire feeding speed and dispensing speed.

The adaption of current 3D printing technology to creating 3D electromagnetic coil geometries includes the following technical innovations in various embodiments.

### Wire feeding

Most wire feeders employ toothed wheels to bite into the wire material as it is forced through the dispenser. In the case of creating an electromagnetic coil, the wire insulation must remain intact. Each turn must remain electrically insulated from its neighbors during winding and insertion to the final housing of the coil. There are a number of embodiments or their combinations to keep the wire insulation intact. For example, designing the tooth height of the feeder wheel to be less than the thickness of the wire insulation coating; providing a curved profile to the teeth to increase the contact area with the outer surface of the wire, and/or designing the grip strength of the feeder wheel to be strong enough to push or pull the wire through the dispenser but not enough for the teeth to damage the wire insulation.

### Wire laving

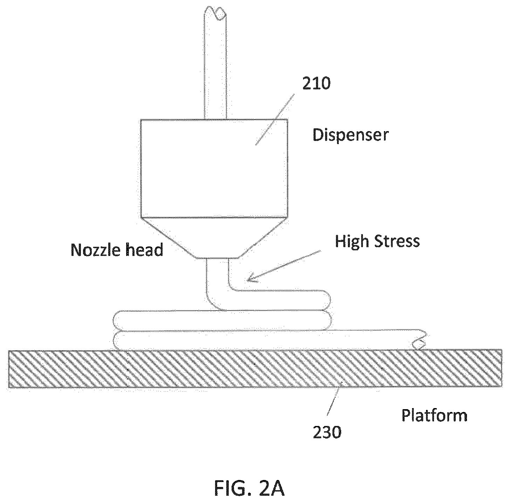

A wire can be dispensed and deposited orthogonal to the direction of travel of the dispenser head, as shown in FIG. 2A. In FIG. 2A, the wire is dispensed by the dispenser 210 in a vertical direction with respect to the platform 230 on which the coil is being built. It can be seen that the wire being laid is bent by an angle of 90 degrees at the dispense location. Since the wire is bent by a large angle, it creates a high stress to the wire. In the case of laying turns of wire, it is desirable to maintain a near tangent incidence angle that minimizes the possibility of damage to the conductor core and insulation.

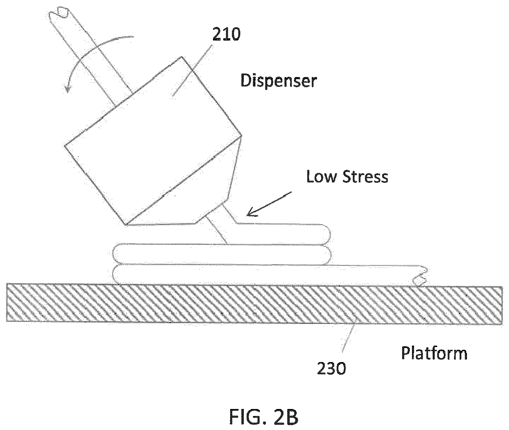

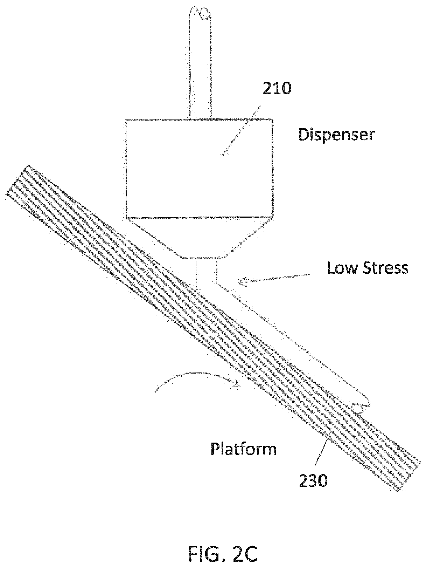

The addition of 4th and 5th axes allow the head and/or target (platform, mandrel, etc.) to be articulated in such a way that the wire maintains an optimal feed angle as shown in FIGS. 2B and 2C. In FIG. 2B, the dispenser 210 is tilted by an angle with respect to the platform 230 according to one embodiment. The tilted angle reduces the bent in the wire and thus reduces the stress. In FIG. 2C, the platform 230 is tilted by an angle with respect to the dispenser 210 in another embodiment. The tilted angle reduces the bent in the wire and thus reduces the stress.

An additional aspect of the present disclosure is to create a nozzle that allows for the wire to be laid down to the platen at a low angle. In one embodiment, this is achieved by having a sloped nozzle head that applies the material at an angle less than 90 degrees and rotates with the direction of movement of the coil to prevent the wire from bending as it is applied. The tapering of the dispenser nozzle head allows more space for maneuvering to an angle of incidence that is closer to tangent.

The programmability of the 3D coil winder allows precise and repeatable control of the wire lead-in and lead-out in addition to providing optimal interstitial winding of each layer without inducing stresses from mechanical post forming or compression needed with traditional methods for high density coils. Winding to final or near final form with multi-axis control offers significant advantages in terms of density, mechanical stress, reliability, and consistency. Conductor paths can be optimized in 3 dimensions and artifacts such as elongation, pinching, and random cross-over are tightly controlled.

Additionally, a build surface of the platform is coated with an adhesive layer and then heated to allow the initial layers of the winding to stick to the platform according to an embodiment. In one embodiment, the temperature of the build surface of platform can be set at different temperatures at different building steps to facilitate the coil adhering to and releasing from the platform.

### Wire bonding

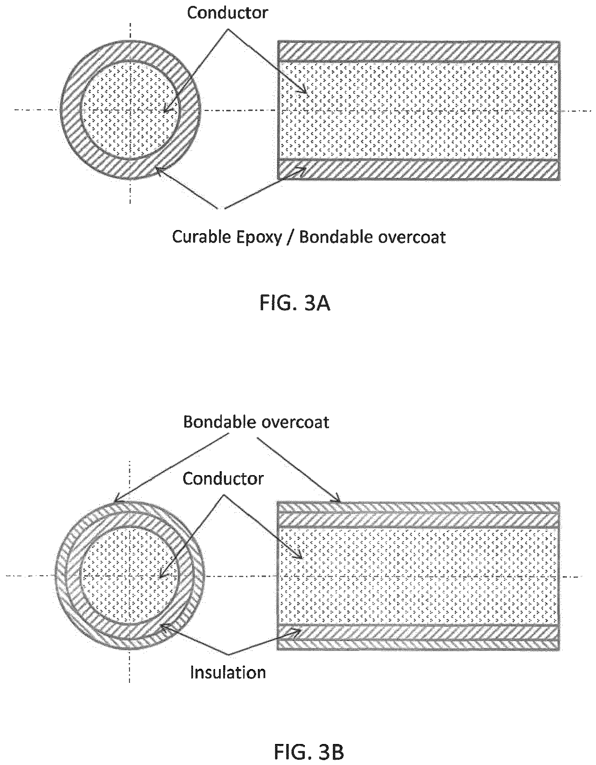

To form a self-supporting coil, one of two methods is typically employed. The first method involves "painting" the insulated wire with a curable epoxy during the winding process, as shown in FIG. 3A. This can be a messy process but is used with great success to create planar coils. Once wound, the coil still on the winding mandrel or bobbin, is then set aside and cured. The second method involves using a wire with two specific coatings, as shown in FIG. 3B. The first is the typical enamel electrical insulating layer. The second is a bondable overcoat. Often a type of thermoplastic, this coating may be melted or softened with heat or chemicals allowing the adjacent wires to fuse together.

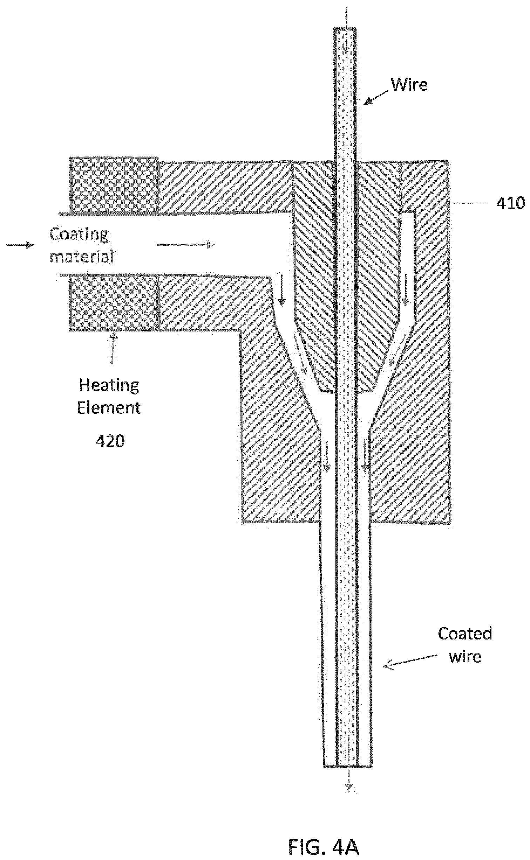

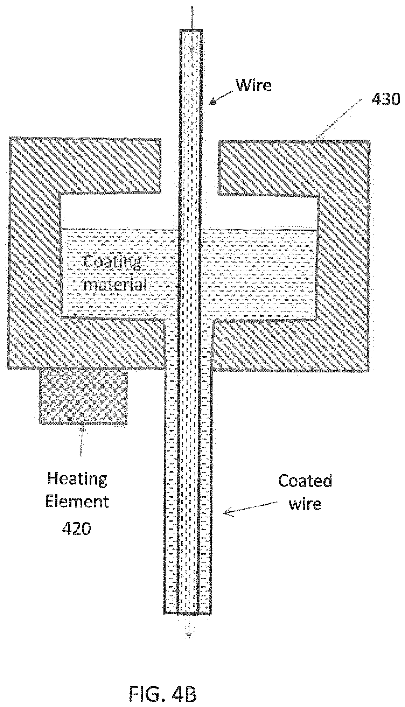

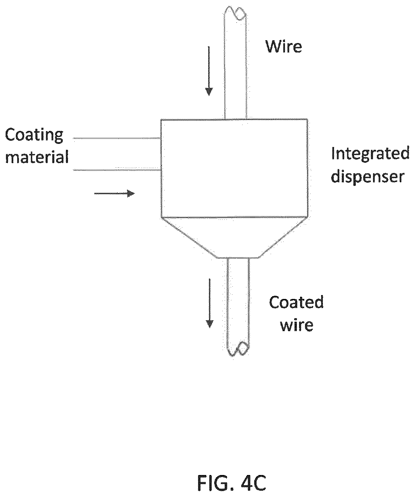

In one embodiment, the wire is coated with a bondable material provided by a coating applicator in which the bondable material is extruded through a die 410 continuously over an axially moving wire as shown in FIG. 4A. If needed, a heating element 420 may be used to bring the bondable material to a molten state. In another embodiment, the wire is pulled through a reservoir 430 of bondable material as shown in FIG. 4B. Note that the coating applicator may have multiple stages for application of multiple layers of coatings to the wire. In one embodiment, the coating applicator is integrated into the wire dispenser as shown in FIG. 4C. Note that the coating assemblies shown in FIGS. 4A - 4C are only example implementations. Other known implementations of applying a coating to a wire are also contemplated.

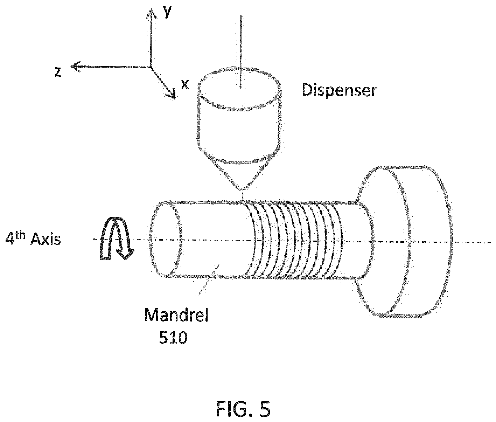

In the case of winding a cylindrical coil, typical for a moving magnet galvanometer, adding a fourth rotary axis of motion allows the coil to be ideally layer wound in its final cylindrical form. Rotation of a target mandrel 510 under a conventional xyz head, as shown in FIG. 5, allows the coil to be wound using primarily one translation axis and the height axis, as the rotating axis effectively planarizes the placement of the wire directly under the head.

Additionally, the mandrel of the 4th axis on the printer is coated with the adhesive layer and then heated to allow the initial layers of the winding to stick to the mandrel.

While the present invention has been described at some length and with some particularity with respect to the several described embodiments, it is not intended that it should be limited to any such particulars or embodiments or any particular embodiment, but it is to be construed with references to the appended claims so as to provide the broadest possible interpretation of such claims in view of the prior art and, therefore, to effectively encompass the intended scope of the invention. Furthermore, the foregoing describes the invention in terms of embodiments foreseen by the inventor for which an enabling description was available, notwithstanding that insubstantial modifications of the invention, not presently foreseen, may nonetheless represent equivalents thereto.

## Claims

1. An apparatus for creating an electromagnetic coil, comprising:
a platform (130) for building the coil;
a dispenser (110) configured to dispense a wire via a nozzle;
a wire feeder (120) configured to feed the wire through the dispenser;
a coating applicator (140) configured to apply a bondable overcoat to the wire, such that when a section of the wire is laid adjacent to another section of the wire, the bondable overcoats of the respective sections bond to each other;
one or more actuators (150) configured to provide at least three degrees of freedom to the dispenser and/or the platform; and
a processor (160) configured to control the one or more actuators to move the dispenser and/or platform such that the wire is dispensed from the nozzle at a specified location relative to the platform;
wherein the processor controls the one or more actuators based on a program stored in a memory (170), the program comprising instructions for laying the wire according to a predetermined pattern.

2. The apparatus of claim 1, wherein the one or more actuators are further configured to rotate the dispenser relative to the platform with the direction of the movement, such that the wire maintains an optimal feed angle while being laid.

3. The apparatus of claim 2, wherein the dispenser comprises a sloped nozzle head to allow for the wire to be laid down to the platform at a small feed angle.

4. The apparatus of claim 1, wherein the wire comprises a conductor core and an insulation coating.

5. The apparatus of claim 4, wherein the insulation coating comprises an enamel electrical insulating layer.

6. The apparatus of claim 1, wherein the bondable overcoat is a curable layer of epoxy.

7. The apparatus of claim 1, wherein the coating applicator is integrated into the dispenser.

8. The apparatus of claim 7, wherein the bondable overcoat comprises thermoplastic and the dispenser is further configured to heat the thermoplastic to enable bonding.

9. The apparatus of claim 1, wherein the bondable overcoat comprises a chemical reactive material and the dispenser is further configured to apply a chemical to the bondable overcoat to enable bonding.

10. The apparatus of claim 1, wherein the platform is coated with an adhesive layer to allow initial layers of wire to attach to the platform.

11. The apparatus of claim 7, wherein the platform is heated to allow initial layers of wire to attach to the platform.

12. The apparatus of claim 1, wherein the platform further comprises a mandrel configured to allow the wire to be wound around the mandrel as the mandrel rotates about an axis.

13. The apparatus of claim 1, further comprising one or more additional dispensers configured to lay one or more additional wires onto the platform.

14. The apparatus of claim 1, wherein the wire feeder comprises one or more toothed wheels configured to grip and push the wire through the dispenser.

15. The apparatus of claim 14, wherein the bite of the one or more toothed wheels is configured to keep any wire insulation intact.

16. The apparatus of claim 1, wherein the coating applicator is configured to apply one or more additional coatings to the wire.

17. The apparatus of claim 16, wherein the outermost coating is the bondable overcoat, and an inner coating is an insulation coating.

18. A method of creating an electromagnetic coil, comprising:
providing a platform (130) for building the coil;
dispensing a wire via a nozzle of a dispenser (110);
feeding, by a feeder (120), the wire through the dispenser;
applying, by a coating applicator (140), a bondable overcoat to the wire, such that when a section of the wire is laid adjacent to another section of the wire, the bondable overcoats of the respective sections bond to each other;
providing, by one or more actuators (150), at least three degrees of freedom to the dispenser and/or the platform; and
controlling, by a processor (160), the one or more actuators to move the dispenser and/or the platform such that the wire is dispensed from the nozzle at a specified location relative to the platform;
wherein the controlling of the one or more actuators is based on a program stored in a memory (170), the program comprising instructions for laying the wire according to a predetermined pattern.
